# EUROPÄISCHE PATENTSCHRIFT

(11) **EP 2 694 424 B1**
(45) Veröffentlichungstag und Bekanntmachung des Hinweises auf die Patenterteilung: **17.06.2015**
(21) Anmeldenummer: 12715020.9
(22) Anmeldetag: 03.04.2012
(51) Int. Cl.: B66C 19/00, B66C 13/12

(54) **PORTALHUBGERÄT MIT ELEKTRISCHEN ANTRIEBEN**
STRADDLE CARRIER DEVICE COMPRISING ELECTRIC DRIVES
APPAREIL ÉLÉVATEUR À PORTIQUE À ENTRAÎNEMENTS ÉLECTRIQUES

(30) Priorität: 06.04.2011 DE 102011001847; 05.10.2011 DE 102011054209
(43) Veröffentlichungstag der Anmeldung: 12.02.2014
(73) Patentinhaber: Terex MHPS GmbH, 40597 Düsseldorf (DE)
(72) Erfinder: WIESCHEMANN, Armin, 46119 Oberhausen (DE); HEGEWALD, Mike, 40597 Düsseldorf (DE); MOUTSOKAPAS, Jannis, 40789 Monheim (DE)
(74) Vertreter: Moser Götze & Partner Patentanwälte mbB
(86) Internationale Anmeldenummer: PCT/EP2012/056094
(87) Internationale Veröffentlichungsnummer: WO 2012/136667

(56) Entgegenhaltungen:
- EP-A1- 2 354 075
- EP-A2- 2 281 769
- WO-A1-2007/143841
- DE-B3-102008 011 539
- JP-A- 2008 156 047
- US-A- 6 155 770

## Beschreibung

Die Erfindung betrifft ein Portalhubgerät für ISO-Container mit elektrischen Antrieben, die über eine Batterie versorgt sind, und mit einem heb- und senkbaren Lastaufnahmemittel für die ISO-Container.

Außerdem betrifft die Erfindung ein Verfahren zum Betrieb eines Portalhubgeräts für ISO-Container mit elektrischen Antrieben, die über eine Batterie versorgt sind, und mit einem heb- und senkbaren Lastaufnahmemittel für die ISO-Container.

Derartige Portalhubgeräte, die auch Portalhubstapelwagen, Portalstapelwagen, Straddle Carrier, Van Carrier, Shuttle Carrier oder Runner genannt werden, sind allgemein bekannt. Es sind spezielle Umschlaggeräte für ISO-Container in Terminals, insbesondere Hafenterminals oder Terminals für den kombinierten Verkehr zwischen Straße und Schiene. Mit Hilfe einer Hubvorrichtung und einem als Spreader bezeichneten Lastaufnahmemittel können Portalhubgeräte Container anheben und nach einem Transport an einem Zielort abstellen. Da die Portalhubgeräte einen spinnenbeinartigen Aufbau aufweisen, können diese einen auf dem Boden oder auf einem anderen Container ruhenden Container überfahren und hierbei zusätzlich je nach Bauweise auch einen angehobenen Container transportieren. Je nach Bauhöhe werden die Portalhubgeräte beispielsweise als 1 über 3-Geräte, 1 über 2- Geräte usw. bezeichnet. Ein 1 über 3-Gerät kann einen Container auf 3 gestapelte Container absetzen, einen von 3 gestapelten Container aufnehmen oder 3 gestapelte Container mit einem aufgenommenen Container überfahren. In diesem Zusammenhang werden unter ISO-Containern genormte Großraum- beziehungsweise Seefrachtcontainer verstanden, die im internationalen Warenverkehr zum Einsatz kommen. Am weitesten verbreitet sind ISO-Container mit einer Breite von 8 Fuß und einer Länge von 20, 40 oder 45 Fuß.

Aus der internationalen Patentanmeldung WO 2009/150303 A1 ist bereits ein Portalhubgerät für ISO-Container bekannt. In üblicher Weise weist das Portalhubgerät - in dessen Fahrrichtung gesehen - einen rechten Fahrwerksträger und einen linken Fahrwerksträger auf. An jedem Fahrwerksträger sind mindestens zwei in Fahrtrichtung hintereinander angeordnete gummibereifte und lenkbare Reifenfahrwerke befestigt. Der rechte und der linke Fahrwerksträger sind über einen vorderen und einen hintern Portalrahmen miteinander verbunden. Im Bereich ihrer oberen Enden sind die beiden Portalrahmen über einen Oberrahmen miteinander verbunden. An dem Oberrahmen ist eine Hubvorrichtung aufgehängt, von der ein Lastaufnahmemittel für die ISO-Container heb- und senkbar ist. Das Portalhubgerät ist vollelektrisch ausgebildet und weist somit elektrische Fahrantriebe, elektrische Lenkantriebe und elektrische Hubantriebe auf. Versorgt werden diese Antriebe über eine mitgeführte wiederaufladbare Batterie. Der Ladevorgang der Batterie erfolgt an einer Ladestation, die im Bereich eines Stapellagers für Container angeordnet ist.

Des Weiteren ist aus der deutschen Gebrauchsmusterschrift DE 20 2004 018 066 U1 ein weiteres Portalhubgerät bekannt, das mittels eines dieselelektrischen Antriebs angetrieben ist. Auch dieses Portalhubgerät weist in üblicher Weise einen vorderen und hinteren Portalrahmen auf, die über einen Oberrahmen miteinander verbunden sind. Im Bereich des Oberrahmens und oberhalb eines Lastaufnahmemittels für Container ist der dieselelektrische Antrieb angeordnet.

Aus der internationalen Patentanmeldung WO 2007/143841 A1 ist ein Portalkran bekannt, der über einen Hybridantrieb betrieben wird. Der Hybridantrieb umfasst einen Verbrennungsmotor und eine Batterie, die fest in den Portalkran eingebaut ist.

Aus der europäischen Patentanmeldung EP 2 354 075 A1 ist ein Portalkran bekannt, der über zwei fest in den Portalkran eingebaute Batterien betrieben wird. Das Aufladen der Batterien kann kontaktlos über ein Energieversorgungssystem erfolgen, wobei vorgesehen ist, dass eine der Batterien aufgeladen werden kann, während die andere noch durch den Betrieb des Portalkrans entladen wird.

Batteriebetriebene Portalhubgeräte, bei denen die Batterien fest eingebaut sind, sind ebenfalls aus der japanischen Patentanmeldung JP 2008 156047 A sowie der Patentschrift US 6 155 770 A bekannt.

Darüber hinaus sind aus der europäischen Patentanmeldung EP 2 281 769 A2 ein manuell betreibbares und aus der deutschen Patentschrift DE 10 2008 011 539 B3 ein vollautomatisches Portalhubgerät bekannt.

Ausgehend von diesem Stand der Technik liegt der vorliegenden Erfindung die Aufgabe zu Grunde, ein verbessertes vollelektrisches Portalhubgerät zu schaffen. Diese Aufgabe wird durch ein Portalhubgerät mit den Merkmalen des Anspruchs 1 sowie ein Verfahren zum Betrieb eines Portalhubgeräts mit den Merkmalen des Anspruchs 12 gelöst. In den Ansprüchen 2 bis 11 bzw. 13 sind vorteilhafte Ausgestaltungen des Portalhubgerätes bzw. des Verfahrens angegeben.

Erfindungsgemäß wird ein verbessertes Portalhubgerät für ISO-Container mit elektrischen Antrieben, die über eine Batterie versorgt sind, und mit einem heb- und senkbaren Lastaufnahmemittel für die ISO-Container dadurch erreicht, dass die Batterie für ein Aufladen der Batterie außerhalb des Portalhubgeräts lösbar mit dem Portalhubgerät verbunden ist und im Zusammenhang mit dem Aufladen auswechselbar ist. Vorteilhafter Weise ist diese Batterie auswechselbar mit dem Portalhubgerät verbunden. Somit kann besonders einfach eine geladene Batterie gegen eine zu ladende Batterie getauscht werden, ohne dass die Verfügbarkeit des Portalhubgeräts für einen Ladevorgang wie bei einer nicht wechselbaren Batterie erforderlich eingeschränkt wird. Der Wechselvorgang kann hierbei manuell, halbautomatisch oder vollautomatisch erfolgen. Der Ladevorgang der Batterie findet somit außerhalb des Portalhubgeräts statt. Die elektrischen Antriebe in Form von Elektromotoren wirken üblicher Weise über Getriebe auf die anzutreibenden Bauteile, um die in dem Portalhubgerät vorhandenen Antriebsaufgaben wie beispielsweise Fahrantrieb, Bremsenantrieb, Lenkantrieb und Hubantrieb zu erfüllen. Für bestimmte Antriebsaufgaben, wie beispielsweise den Lenkantrieb oder den Hubantrieb, kann es erforderlich sein, über den elektrischen Antrieb eine Hydraulikpumpe anzutreiben, um den Lenkantrieb oder den Hubantrieb elektro-hydraulisch auszugestalten. Der gewählte batterie-elektrische Antrieb hat den Vorteil, dass im Vergleich zu einem Dieselmotor ein etwa mehr als doppelt so hoher Wirkungsgrad erreicht wird. Dies führt zu einem geringeren Energieverbrauch, einer höheren Wirtschaftlichkeit, einem geringeren Wartungsaufwand und einer hohen Umweltverträglichkeit insbesondere in Hinblick auf Lärm und Emissionen.

Vorteilhafte Weise ist vorgesehen, dass ausschließlich rein-elektrische Antriebe d.h. keine elektro-hydraulischen Antriebe vorgesehen sind, so dass das Portalhubgerät ohne hydraulische Komponenten auskommt.

Durch die Anordnung der Batterie oberhalb des Lastaufnahmemittels wird der dort vorhandene Raum optimal genutzt, um eine Batterie mit hoher Kapazität, die eine entsprechende Größe aufweist, unterzubringen.

Besonders vorteilhaft ist vorgesehen, dass das Portalhubgerät einen vorderen Portalrahmen und einen hinteren Portalrahmen aufweist, die im Bereich ihren oberen Enden über einen Oberrahmen miteinander verbunden sind, und die Batterie im Bereich des Oberrahmens angeordnet ist

Alternativ kann insbesondere bei hohen Portalhubgeräten vorgesehen sein, dass die Batterie im Bereich von Radfahrwerken des Portalhubgeräts angeordnet ist.

Eine hohe Zuverlässigkeit des Portalhubgeräts wird dadurch erreicht, dass die Batterie als Bleibatterie ausgebildet ist. Zu einer Verwendung von Bleibatterien in Fahrzeugen gibt es langjährige Erfahrungen. Die erforderliche Batterie hat ein Gewicht von etwa 6 bis 10t.

In einer besonders vorteilhaften Ausgestaltung ist vorgesehen, dass die Batterie innerhalb des Portalhubgeräts eine tragende Funktion hat. Diese Ausgestaltung ist besonders raumsparend, da Tragkonstruktion im Bereich des Oberrahmens und die Batterie in ihrer Funktion miteinander verschmelzen.

Das Portalhubgerät ist in einer 1 über 1-Bauweise ausgebildet und vorzugsweise in einer 1 über 0-Bauweise ausgebildet. Durch die 1 über 0-Bauweise werden nur geringe Hubleistungen auf Grund der geringen Hubhöhe benötigt. Auch führt die 1 über 0-Bauweise zu einem tief liegenden Schwerpunkt, der eine kompakte und auch leichte Bauweise des Portalhubgerätes ermöglicht. Da das Portalhubgerät einen tief liegenden Schwerpunkt aufweist und somit über eine hohe Stand- beziehungsweise Kippfestigkeit verfügt, ist eine Verfahrbarkeit über nur vier gummibereifte Radreifenfahrwerke möglich. Durch die Beschränkung auf vier Radreifenfahrwerke wird auch die Komplexität des gesamten Portalhubgerätes verringert. Der Antrieb und die Lenkung lassen sich einfacher ausgestalten. Im Falle eines automatisch geführten Portalhubgerätes vereinfacht sich auch die Navigation.

In einer bevorzugten Ausführungsform ist das Portalhubgerät automatisch geführt.

Alternativ ist vorgesehen, dass an dem Portalhubgerät eine Fahrerkabine angeordnet ist und das Portalhubgerät manuell verfahrbar ist.

Ein Verfahren zum Betrieb eines Portalhubgeräts für ISO-Container mit elektrischen Antrieben, die über eine Batterie versorgt sind, und mit einem heb- und senkbaren Lastaufnahmemittel für die ISO-Container wird dadurch verbessert, dass eine leere Batterie gegen eine geladene Batterie ausgewechselt wird.

Das Verfahren wird weiter dadurch verbessert, dass die Batterie für das Auswechseln horizontal und quer zur Fahrtrichtung des Portalhubgeräts heraus beziehungsweise hinein bewegt wird.

Die Erfindung wird nachfolgend an Hand eines in einer Zeichnung dargestellten Ausführungsbeispiels näher erläutert. Es zeigen:
Figur 1 eine schematische Seitenansicht eines Portalhubgerätes in einer ersten Ausführungsform,
Figur 2 eine schematische Seitenansicht eines Portalhubgerätes in einer zweiten Ausführungsform und
Figur 3 eine Draufsicht auf ein Hafenlayout mit den Portalhubgeräten gemäß Figuren 1 oder 2.

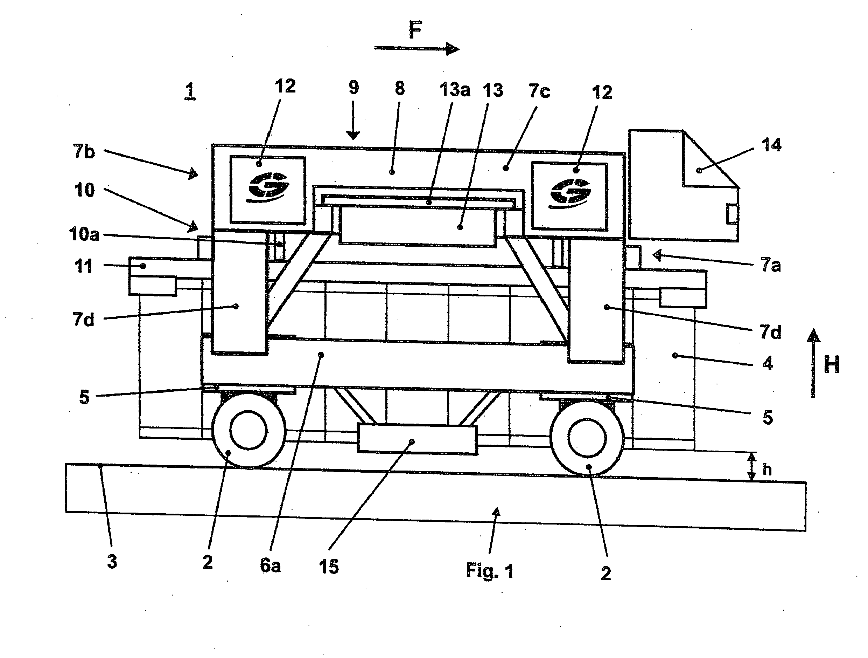

Die Figur 1 zeigt eine schematische Seitenansicht eines Portalhubgerätes 1, das über insgesamt vier gummibereifte Räder 2 auf einer Flurfläche 3 verfahrbar ist. Die Räder 2 sind in üblicher in den Ecken eines gedachten Rechtecks angeordnet. Grundsätzlich ist es auch möglich, mehr als vier gummibereifte Räder 2 vorzusehen, wenn dies technisch erforderlich ist. Hiermit einher geht dann aber, dass sich die Komplexität des Portalhubgerätes 1 insgesamt erhöht und somit eine aufwendigere Technik im Bereich des Antriebes und der Lenkung zum Einsatz kommen muss. Bei automatischen geführten Portalhubgeräten 1 wird auch die Navigation durch die Erhöhung der zu lenkenden Räder 2 aufwendiger.

Die Räder 2 des Portalhubgerätes 1 sind Bestandteile von Radfahrwerken 5, die nicht dargestellte elektrische Fahrantriebe und elektrische Lenkmotoren aufweisen. Durch die vorhandene Einzelradlenkung können über eine entsprechende Steuerung verschiedene Lenkprogramme wie beispielsweise eine optimierte Achsschenkellenkung oder ein Krebsgang realisiert werden. Von den insgesamt vier Radfahrwerken 5 sind in Fahrtrichtung F des Portalhubgerätes 1 gesehen jeweils zwei mit Abstand und hintereinander an einem rechten Fahrwerksträger 6a und an einem von dem rechten verdeckten linken Fahrwerksträger befestigt, die jeweils mit ihrer Längserstreckung in Fahrtrichtung F des Portalhubgerätes 1 ausgerichtet sind. Die beiden parallel nebeneinander und mit Abstand zueinander angeordneten Fahrwerksträger 6a sind vorne über einen vorderen Portalrahmen 7a und hinten über einen hinteren Portalrahmen 7b miteinander verbunden. Jeder der beiden u-förmigen Portalrahmen 7a und 7b besteht aus einem horizontalen oberen und quer zur Fahrtrichtung F ausgerichteten Portalträger 7c, an dessen seitlichen Enden sich jeweils eine vertikale Portalstütze 7d anschließt. Der vordere und der hintere Portalrahmen 7a, 7b sind über in Fahrtrichtung F ausgerichtete Längsträger 8 miteinander verbunden.

Die beiden Portalträger 7c und die Längsträger 8 bilden einen Oberrahmen 9, an dem eine Hebevorrichtung 10 aufgehängt ist, um die ISO-Container 4 von dem Flurboden 3 aufnehmen und auf dem Flurboden 3 absetzen zu können. Die hierfür erforderliche Hubhöhe h beträgt etwa 150 bis 300mm. Die Hebevorrichtung 10 umfasst einen oder mehrere nicht dargestellte elektrische Hubantriebe, die über Seile oder eine Hebemechanik 10a mit einem Lastaufnahmemittel 11 verbunden sind. Das Lastaufnahmemittel 11 ist als sogenannter Spreaderrahmen ausgebildet, um ISO-Container 4 handhaben zu können. Die Spreaderrahmen sind als sogenannte singlelift oder twin-lift Spreader ausgebildet, d.h. in der twin-lift Variante können in Fahrtrichtung F des Portalhubgeräts 1 gesehen zwei 20 Fuß ISO-Container 4 hintereinander aufgenommen werden. In üblicher Weise ist das Lastaufnahmemittel 11 unterhalb des Oberrahmens 9 und zwischen den Portalstützen 7d des vorderen Portalrahmens 7a und den Portalstützen 7d des hinteren Portalrahmens 7b in einer im Wesentlichen vertikalen Hubrichtung H auf und ab bewegbar.

Außerdem ist im Bereich des Oberrahmens 9 ausreichend Raum vorhanden, um Schaltschränke 12 und eine oder mehrere Batterien 13 unterzubringen. Eine hohe Zuverlässigkeit des Schwerlast-Transportfahrzeuges wird dadurch erreicht, dass die Batterie 13 als Bleibatterie ausgebildet ist. Zu einer Verwendung von Bleibatterien in Fahrzeugen gibt es langjährige Erfahrungen. Das Gewicht der Batterie liegt im Bereich von etwa 6 bis 10t, vorzugsweise 8b bis 9t. Des Weiteren ist vorgesehen, dass eine leere Batterie 13 gegen eine geladene Batterie 13 auswechselbar ist und von einer entsprechenden Vorrichtung quer zur Fahrtrichtung F horizontal aus dem Oberrahmen 9 heraus beziehungsweise in diesen hinein bewegbar ist. Der Ladevorgang der Batterie 13 findet somit außerhalb des Portalhubgerätes 1 statt und das Portalhubgerät 1 ist nach einem Batteriewechsel sofort wieder verfügbar. Der Wechselvorgang kann hierbei manuell, halbautomatisch oder vollautomatisch erfolgen.

Auch ist es in einer alternativen Ausführungsform möglich, die auswechselbaren Batterien 13 in Fahrrichtung F gesehen zwischen den Portalstützen 7d des vorderen Portalrahmens 7a und den Portalstützen 7d des unteren Portalrahmens 7b anzuordnen, sowie auf Höhe der Radfahrwerke 5. Es sind somit aus Gründen der Gewichtsverteilung zwei Batterien 13 vorgesehen, die Fahrrichtung F gesehen rechts und links neben einen zu transportierenden ISO-Container 4 angeordnet sind. Auch sind die Batterien 13 an den Fahrwerksträgem aufgehängt, von denen nur der rechte Fahrwerksträger 6a gezeigt ist. Hierfür kann der Fahrwerksträger an seiner Unterseite auch zusätzlich ausgespart werden.

Sollten in den nächsten Jahren andere Batterietypen, wie beispielsweise Lithium-Ionen-Batterien, eine ebenso hohe Zuverlässigkeit wie Blei-Batterien erreichen, ist deren Einsatz auch möglich.

Insgesamt ist das Portalhubgerät 1, insbesondere die Hubhöhe der Hebevorrichtung 10, als sogenanntes 1 über 0-Gerät ausgebildet, d. h. mittels des Portalhubgerät 1 kann ein einzelner ISO-Container 4 von dem Flurboden 3 aufgenommen und wieder abgesetzt werden. Ein Stapeln von ISO-Containern 4 ist nicht möglich. Mit einem entsprechend ausgebildeten Lastaufnahmemittel 11 (twin-lift) können selbstverständlich zwei in Fahrtrichtung F gesehen hintereinander angeordnete ISO-Container 4 mit einer Länge von jeweils 20 Fuß gemeinsam aufgenommen werden. Durch diese Ausgestaltung als 1 über 0-Gerät weist das Portalhubgerät 1 einen tiefen Schwerpunkt auf, hat eine gute Standsicherheit und die Konstruktion kann sehr kompakt erfolgen. Auch sind die Leistungsanforderungen an die elektrischen Hubantriebe nicht so hoch. Des Weiteren liegt eine geringe Bauhöhe und daraus resultierend ein geringes Gewicht vor, so dass vier Räder zur Aufnahme der Last ausreichen.

Ferner kann das Portalhubgerät 1 manuell von einem Fahrer gesteuert werden oder automatisch geführt sein. Für die manuelle Variante ist im Bereich des vorderen Portalrahmens 7a eine Fahrerkabine 14 befestigt. Im Falle der automatisch geführten Variante ist im Bereich unterhalb der Fahrwerksträger 6a, und jeweils zwischen den vorderen und hinteren Radfahrwerken 5 ausreichend Raum für Sensoren 15, die je nach Art des verwendeten Navigationssystems ausgebildet sind. Kommen in den Flurboden 3 eingelassene Transponder zum Einsatz sind die Sensoren 15 als Antenne ausgebildet.

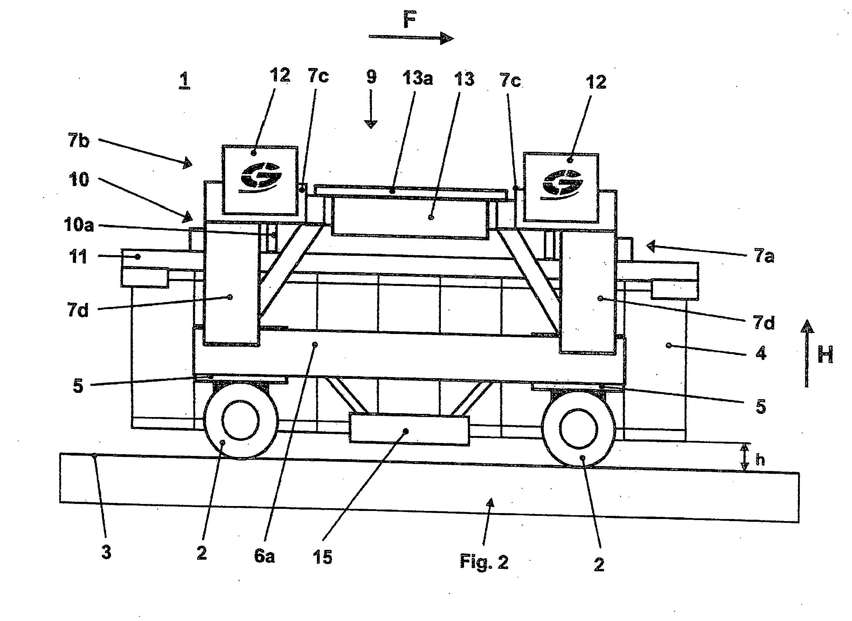

Die Figur 2 zeigt eine schematische Seitenansicht eines Portalhubgerätes 1 in einer zweiten Ausführungsform. Dieses Portalhubgerät 1 stimmt im Wesentlichen mit dem zuvor beschriebenen Portalhubgerät 1 überein, so dass vollinhaltlich auf die vorstehende Beschreibung verwiesen wird. Auch wurden die gleichen Bezugszeichen wie in der Figur 1 verwendet.

In dieser zweiten Ausführungsform ist die Batterie 13 beziehungsweise deren Aufnahmerahmen 13a als tragendes Bauteil ausgebildet, das dem Oberrahmen 9 während des Betriebs des Portalhubgeräts 1 eine hinreichende Festigkeit gibt. Hierfür wird die Batterie 13 nach deren Einsetzen das Portalhubgerät 1 beispielsweise über Bolzen zusätzlich gesichert. Auch weist die Batterie 13 einen entsprechend ausgelegten Batterierahmen 13a auf, um die aus dem Betrieb des Portalhubgerätes 1 resultierenden Kräfte zwischen dem vorderen und hinteren Portalrahmen7a, 7b aufnehmen zu können. Im Zusammenhang mit dem Wechsel der Batterie 13 ist der Oberrahmen 9 ohne die Batterie 13 dann zwar geschwächt, jedoch weist der Oberrahmen 9 eine ausreichende Festigkeit auf, während das Portalhubgerät 1 auf eine neue geladene Batterie 13 wartet.

Für die automatische Führungs-Variante ist im Bereich im Bereich unterhalb der Fahrwerksträger 6a und jeweils zwischen den vorderen und hinteren Radfahrwerken 5 ausreichend Raum für Sensoren 15, die je nach Art des verwendeten Navigationssystems ausgebildet sind. Kommen in den Flurboden 3 eingelassene Transponder zum Einsatz sind die Sensoren 15 als Antenne ausgebildet. In Verbindung mit der automatisierten Führungs-Variante kann auch eine vollautomatische Objekterkennung der aufzunehmenden Container 4 vorgehen sein. Da die Positionen der Container 4 auf dem Kai 16 grob bekannt sind, kann das Portalhubgerät 1 dorthin selbstständig navigieren. Vor Erreichen der Endposition werden die Container 4 mittels einer Objekterkennungssensorik überfahren und aus den hieraus gewonnenen Positionsdaten das Portalhubgerät 1 feinpositioniert. Anschließend erfolgt die Aufnahme der Container 4.

Diese Ausführungsform ist auch für eine Anordnung der Batterien 13 im Bereich der Fahrwerksträger 6a denkbar.

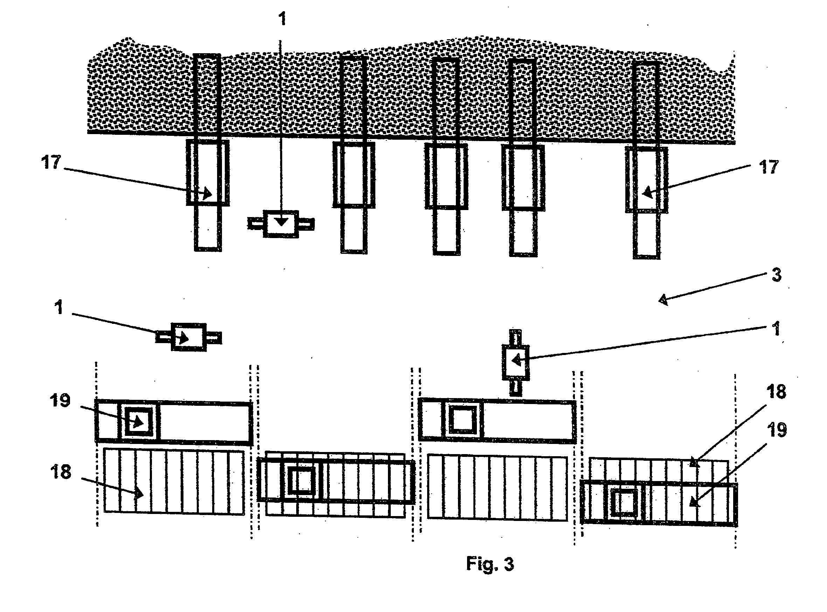

Die Figur 3 zeigt eine Draufsicht auf ein Hafenlayout unter Einsatz der vorbeschriebenen Portalhubgeräte 1 gemäß Figuren 1 oder 2. Die Flurfläche 3 ist Bestandteil eines Kais 16, über den mittels einer Vielzahl von Portalhubgeräten 1 die ISO-Container 4 zwischen mehreren Containerkranbrücken 17 und einem an dem Kai 16 angrenzenden Container-Stapellager 18 mit Container-Stapelkrane 19 umgeschlagen werden. Anstatt der Container-Umschlagkranbrücken können selbstverständlich auch andere Umschlaggeräte wie beispielsweise Hafenmobilkrane zum Einsatz kommen, insbesondere wenn es sich um kleinere Umschlaghäfen handelt.

Außerdem kann vorgesehen sein beziehungsweise technisch erforderlich sein, anstatt rein elektrischer Antriebe, die auf Getriebe wirken, für bestimmte Antriebsaufgaben wie die Lenkung oder den Hub auf elektro-hydraulische Antriebe zurück zu greifen. Auch ist es möglich, bei den Portalhubgeräten 1 eine Energierückgewinnung beim Senken der ISO-Container 4 oder beim Abbremsen des Portalhubgerätes 1 vorzusehen. Die zurückgewonnene Energie wird dann in Kurzzeit-Energiespeicher wie sogenannte Ultra-Caps oder Super-Caps gespeichert.

### Bezugszeichenliste

- 1: Portalhubgerät
- 2: Rad
- 3: Flurfläche
- 4: ISO-Container
- 5: Radfahrwerk
- 6a: rechte Fahrwerksträger
- 7a: vorderer Portalrahmen
- 7b: hinterer Portalrahmen
- 7c: oberer Portalträger
- 7d: Portalstütze
- 8: Längsträger
- 9: Oberrahmen
- 10: Hebevorrichtung
- 10a: Hebemechanik
- 11: Lastaufnahmemittel
- 12: Schaltschrank
- 13: Batterie
- 14: Fahrerkabine
- 15: Sensor
- 16: Kai
- 17: Containerbrückenkran
- 18: Containerstapellager
- 19: Containerstapelkran

- F: Fahrtrichtung
- H: Hubrichtung
- h: Hubhöhe

## Patentansprüche

1. Portalhubgerät für ISO-Container mit elektrischen Antrieben, die über eine Batterie versorgt sind, und mit einem heb- und senkbaren Lastaufnahmemittel für die ISO-Container, **dadurch gekennzeichnet, dass** die Batterie (13) für ein Aufladen der Batterie (13) außerhalb des Portalhubgeräts (1) lösbar mit dem Portalhubgerät (1) verbunden ist und im Zusammenhang mit dem Aufladen auswechselbar ist.

2. Portalhubgerät nach Anspruch 1 **dadurch gekennzeichnet, dass** ausschließlich elektrische Antriebe vorgesehen sind.

3. Portalhubgerät nach Anspruch 1 oder 2, **dadurch gekennzeichnet, dass** die Batterie (13) oberhalb des Lastaufnahmemittels (11) angeordnet ist.

4. Portalhubgerät nach einem der Ansprüche 1 bis 3, **dadurch gekennzeichnet, dass** das Portalhubgerät (1) einen vorderen Portalrahmen (7a) und einen hinteren Portalrahmen (7b) aufweist, die im Bereich ihren oberen Enden über einen Oberrähmen (9) miteinander verbunden sind, und die Batterie (13) im Bereich des Oberrahmens (9) angeordnet ist

5. Portalhubgerät nach Anspruch 1 oder 2, **dadurch gekennzeichnet, dass** die Batterie (13) im Bereich von Radfahrwerken (5) des Portalhubgeräts (1) angeordnet ist.

6. Portalhubgerät nach einem der Ansprüche 1 bis 5, **dadurch gekennzeichnet, dass** die Batterie (13) als Bleibatterie ausgebildet ist und ein Gewicht von etwa 6 bis 10t hat.

7. Portalhubgerät nach einem der Ansprüche 1 bis 6, **dadurch gekennzeichnet, dass** die Batterie (13) innerhalb des Portalhubgeräts (1) eine tragende Funktion hat.

8. Portalhubgerät nach einem der Ansprüche 1 bis 7, **dadurch gekennzeichnet, dass** das Portalhubgerät (1) in einer 1 über 0-Bauweise ausgebildet ist.

9. Portalhubgerät nach einem der Ansprüche 1 bis 8, **dadurch gekennzeichnet, dass** das Portalhubgerät (1) in einer 1 über 1-Bauweise ausgebildet ist.

10. Portalhubgerät nach einem der Ansprüche 1 bis 9, **dadurch gekennzeichnet, dass** das Portalhubgerät (1) automatisch geführt ist.

11. Portalhubgerät nach einem der Ansprüche 1 bis 9, **dadurch gekennzeichnet, dass** an dem Portalhubgerät (1) eine Fahrerkabine (14) angeordnet ist und das Portalhubgerät (1) manuell verfahrbar ist.

12. Verfahren zum Betrieb eines Portalhubgeräts für ISO-Container mit elektrischen Antrieben, die über eine Batterie versorgt sind, und mit einem heb- und senkbaren Lastaufnahmemittel für die ISO-Container, **dadurch gekennzeichnet, dass** eine leere Batterie (13) gegen eine geladene Batterie (13) ausgewechselt wird.

13. Verfahren nach Anspruch 12, **dadurch gekennzeichnet, dass** die Batterie (13) für das Auswechseln horizontal und quer zur Fahrtrichtung (F) des Portalhubgeräts (1) heraus beziehungsweise hinein bewegt wird.

## Claims

1. Straddle carrier for ISO containers, having electrical drives which are supplied by a battery, and having a raisable and lowerable load pickup means for the ISO containers, **characterised in that** the battery (13) is detachably connected to the straddle carrier (1) for charging of the battery (13) off the straddle carrier (1), and is able to be exchanged in connection with the charging.

2. Straddle carrier according to claim 1, **characterised in that** only electrical drives are provided.

3. Straddle carrier according to claim 1 or 2, **characterised in that** the battery (13) is arranged above the load pickup means (11).

4. Straddle carrier according to one of claims 1 to 3, **characterised in that** the straddle carrier (1) has a front straddle frame (7a) and a rear straddle frame (7b) which are connected together in the region of their upper ends by a top frame (9), and the battery (13) is arranged in the region of the top frame (9).

5. Straddle carrier according to claim 1 or 2, **characterised in that** the battery (13) is arranged in the region of wheeled running gear units (5) of the straddle carrier (1).

6. Straddle carrier according to one of claims 1 to 5, **characterised in that** the battery (13) takes the forms of a lead-acid battery and weighs approximately 6 to 10 t.

7. Straddle carrier according to one of claims 1 to 6, **characterised in that** the battery (13) performs a load-bearing function within the straddle carrier (1).

8. Straddle carrier according to one of claims 1 to 7, **characterised in that** the straddle carrier (1) is in the form of a 1-over-0 stacking structure.

9. Straddle carrier according to one of claims 1 to 8, **characterised in that** the straddle carrier (1) is in the form of a 1-over-1 stacking structure.

10. Straddle carrier according to one of claims 1 to 9, **characterised in that** the straddle carrier (1) is guided automatically.

11. Straddle carrier according to one of claims 1 to 9, **characterised in that** a driver's cab (14) is arranged on the straddle carrier (1) and the straddle carrier (1) can be driven manually.

12. Method of operating a straddle carrier for ISO containers having electrical drives which are supplied by a battery, and having a raisable and lowerable load pickup means for the ISO containers, **characterised in that** a discharged battery (13) can be exchanged for a charged battery (13).

13. Method according to claim 12, **characterised in that**, to make the exchange, the battery (13) can be moved in and out horizontally and transversely to the direction of travel (F) of the straddle carrier (1).

## Revendications

1. Appareil de levage pour portique destiné à conteneurs ISO, ledit appareil comprenant des entraînements électriques qui sont alimentés par une batterie, et un moyen de réception de charge qui est destiné aux conteneurs ISO et qui peut être levé et abaissé, **caractérisé en ce que** la batterie (13) est reliée de façon amovible à l'appareil de levage pour portique (1) pour charger la batterie (13) à l'extérieur de l'appareil de levage pour portique (1) et peut être remplacée pour être rechargée.

2. Appareil de levage pour portique selon la revendication 1, **caractérisé en ce qu'**il n'est prévu que des entraînements électriques.

3. Appareil de levage pour portique selon la revendication 1 ou 2, **caractérisé en ce que** la batterie (13) est disposée au-dessus du moyen de réception de charge (11).

4. Appareil de levage pour portique selon l'une des revendications 1 à 3, **caractérisé en ce que** l'appareil de levage pour portique (1) comporte un cadre de portique avant (7a) et un cadre de portique arrière (7b) qui sont reliés entre eux au niveau de leurs extrémités supérieures par un cadre supérieur (9) et la batterie (13) est disposée au niveau du cadre supérieur (9).

5. Appareil de levage pour portique selon la revendication 1 ou 2, **caractérisé en ce que** la batterie (13) est disposée au niveau de mécanismes de roulement à roues (5) de l'appareil de levage pour portique (1).

6. Appareil de levage pour portique selon l'une des revendications 1 à 5, **caractérisé en ce que** la batterie (13) est conçue sous la forme d'une batterie au plomb et a un poids d'environ 6 à 10 t.

7. Appareil de levage pour portique selon l'une des revendications 1 à 6, **caractérisé en ce que** la batterie (13) à l'intérieur de l'appareil de levage pour portique (1) a une fonction de support.

8. Appareil de levage pour portique selon l'une des revendications 1 à 7, **caractérisé en ce que** l'appareil de levage pour portique (1) est formé dans un mode de construction 1 sur 0.

9. Appareil de levage pour portique selon l'une des revendications 1 à 8, **caractérisé en ce que** l'appareil de levage pour portique (1) est formé dans un mode de construction 1 sur 1.

10. Appareil de levage pour portique selon l'une des revendications 1 à 9, **caractérisé en ce que** l'appareil de levage pour portique (1) est guidé automatiquement.

11. Appareil de levage pour portique selon l'une quelconque des revendications 1 à 9, **caractérisé en ce qu'**une cabine d'opérateur (14) est disposée sur l'appareil de levage pour portique (1) et l'appareil de levage pour portique (1) peut être déplacé manuellement.

12. Procédé pour faire fonctionner un appareil de levage pour portique destiné à des conteneurs ISO et comprenant des entraînements électriques qui sont alimentés par une batterie, et un moyen de réception de charge destiné aux conteneurs ISO et pouvant être levé et abaissé, **caractérisé en ce qu'**une batterie déchargée (13) est remplacée une batterie chargée (13).

13. Procédé selon la revendication 12, **caractérisé en ce que** la batterie (13) est déplacée dans le sens de l'insertion ou de l'extraction horizontalement et transversalement à la direction de roulement (F) de l'appareil de levage pour portique (1) pour être remplacée.
